# EUROPÄISCHE PATENTSCHRIFT

(11) **EP 0 360 004 B1**
(45) Veröffentlichungstag und Bekanntmachung des Hinweises auf die Patenterteilung: **31.03.1993**
(21) Anmeldenummer: 89115240.7
(22) Anmeldetag: 18.08.1989
(51) Int. Cl.: A62C 2/06, F16L 55/132

(54) **Vorrichtung zur Explosionsdruckentlastung**
Device for explosion pressure relief
Dispositif pour le soulagement de pression d'explosion

(30) Priorität: 20.09.1988 DE 3831828
(43) Veröffentlichungstag der Anmeldung: 28.03.1990
(73) Patentinhaber: ALFO AG AKTIENGESELLSCHAFT FÜR INDUSTRIEAPPARATE, CH-3280 Muntelier (CH)
(72) Erfinder: Brennecke, Hermann, Dipl.-Ing., D-6100 Darmstadt-Eberstadt (DE); Liere, Horst, Dipl.-Ing., D-6116 Eppertshausen (DE)
(74) Vertreter: Brommer, Hans Joachim, Dr.-Ing.

(56) Entgegenhaltungen:
- DE-A- 2 534 525
- DE-B- 1 041 871
- DE-C- 3 617 522
- FR-A- 2 387 397
- GB-A- 793 231

## Beschreibung

Die Erfindung betrifft eine Vorrichtung zur Explosionsdruckentlastung bei Leitungen, die von explosionsgefährlichen Stoffen durchströmt werden, wobei die vom Explosionsherd kommende Zuleitung in eine Kammer mündet und dazu beabstandet, etwa in dazu entgegengesetzter Position die abgehende Leitung an die Kammer angeschlossen ist und die Kammer außerdem zumindest eine sich unter dem Explosionsdruck zur Atmosphäre hin öffnende Schutzklappe, Abdeckplatte oder dergleichen aufweist.

Als Schutzmaßnahme gegen die Auswirkungen von Explosionen bei Anlagen, in denen explosionsgefährliche Stoffe wie Brenngase, Pulver-Luft-Gemische verarbeitet oder gefördert werden, sind neben Flammensperren vor allem die vorgenannten Druckentlastungseinrichtungen bekannt. Ihr Prinzip besteht darin, beim Entstehen oder nach einer gewissen Ausweitung einer Explosion die ursprünglich abgeschlossene Anlage kurzfristig oder bleibend in eine ungefährliche Richtung zu öffnen. Dadurch wird der Aufbau eines unzulässig hohen Explosionsdruckes im Inneren der Anlage und somit ein Bersten der betroffenen Anlageteile verhindert.

Damit bei Rohrleitungen die Flammenfront nicht weiterlaufen kann, ist die vom Explosionsherd kommende Zuleitung im allgemeinen direkt auf die sich öffnende Schutzklappe gerichtet, wogegen die weiterführende Leitung am entgegengesetzte Ende der Kammer abgeht. Die Hauptwirkung der Explosion wird dadurch ins Freie, meistens nach oben, gelenkt. Eine Explosionsfortpflanzung in die nach unten abgehende, weiterführende Leitung findet allenfalls mit deutlich verringerter Explosionsgeschwindigkeit statt.

Hiervon ausgehend liegt die Aufgabe der vorliegenden Erfindung darin, die Explosionsfortpflanzung zur abgehenden Leitung nicht nur zu bremsen, sondern total auszuschließen.

Diese Aufgabe wird erfindungsgemäß dadurch gelöst, daß der zur abgehenden Leitung führende Zwischenraum zwischen Kammer und Zuleitung zylindrisch zu dem Rohrabschnitt angeordnet und durch einen Schnellverschluß verschließbar ist, dessen Auslösung durch einen Druck- oder Flammendetektor erfolgt. Dieser Detektor ist in Richtung zum Explosionsherd versetzt angeordnet und stellt sicher, daß die Verbindung zwischen ankommender und abgehender Leitung blockiert wird, bevor die Explosionsfront die Kammer erreicht und die Schutzklappe, Abdeckplatte oder dergleichen absprengt. Auf diese Weise wird durch ein und dasselbe Bauelement sowohl die Druckentlastung als auch eine Unterbrechung des Leitungsstranges und somit eine Unterbindung der Explosionsfortpflanzung gewährleistet.

Es ist zwar durch die GB-A 793 231, Figur 2, bereits bekannt, zum Explosionsschutz in einem Rohr ein Ventil einzubauen, das aus einer elastischen Membran besteht. Diese Membran wird von außen mit einem Druckmittel beaufschlagt und dehnt sich dann bis zur gegenseitigen Anlage der Membranwände, wodurch der Leitungsquerschnitt verschloßen wird. Es fehlt aber der Gedanke, mit zwei ineinander angeordneten Rohren zu arbeiten und die Membran auf einen Ringraum zwischen innerem und äußerem Rohr wirken zu lassen, wobei dieser Ringraum die Verbindung zu einer abgehenden Leitung bildet. Auch fehlt der Entgegenhaltung der Gedanke, dieses System zu übertragen auf eine Vorrichtung mit einer sich unter dem Explosionsdruck öffnenden Schutzklappe.

Die vorliegende Erfindung besteht außerdem darin, für den genannten Schnellverschluß eine besonders vorteilhafte Konstruktion anzugeben. Diese Konstruktion ist dadurch gekennzeichnet, daß der Schnellverschluß aus einer etwa ringförmigen Membran besteht, die in dem Zwischenraum zwischen Zuleitung und Kammer angeordnet ist und in ihrer Ruheposition die Passage durch den Zwischenraum freiläßt, wohingegen sie im Explosionsfall hydraulisch oder pneumatisch gedehnt und damit in die Schließstellung bringbar ist.

Aus Platzgründen empfiehlt es sich, die Membran an der Kammerwand anzuordnen und sie durch Druckbeaufschlagung radial nach innen gegen die Zuleitung zu drücken. Dabei wird die Membran so in die Kammer eingebaut, daß sie in der Ruhestellung bündig an die Kammerwand anschließt. Der Zwischenraum zwischen Kammer und zuführender Leitung bleibt dadurch ohne störende Einbauten. Dies ist insbesondere von Bedeutung bei der Förderung von Pulver-Luft-Mischungen, die bekanntlich stark dazu neigen, sich an Vorsprüngen abzusetzen und dort Querschnittsverengungen zu bilden.

Damit die Membran in ihrer Schließstellung einen zuverlässigen und dichten Abschluß bilden kann, empfiehlt es sich, daß die Zuleitung einen längeren zylindrischen Abschnitt aufweist, der koaxial und äqudistant zu der Membran angeordnet ist und dadurch eine genügend große Dichtungsfläche zur Verfügung stellt.

Damit die Membran schnellstmöglich aus ihrer Ruhestellung in die Geschlossenstellung gebracht werden kann, ist sie zweckmäßig über ein Ventil an einen vorgespannten Druckspeicher angeschlossen. Wird dieses Ventil durch den Druck- oder Flammendetektor ausgelöst, so springt die Membran schlagartig in die Geschlossenstellung.

Eine andere zweckmäßige Ausgestaltung des Schnellverschlusses besteht darin, daß er durch einen Vorhang fein zerstäubten Löschmittels gebildet wird. Dabei wird das Löschmittel, das auch Wasser sein kann, über zahlreiche in der Kammerwand angeordnete Bohrungen nach innen auf die Zuleitung gesprüht, so daß ein kontinuierlicher, quasi dichter Löschmittel-Schleier entsteht, der etwa ankommende Flammen erstickt.

Damit das Löschmittel genügend rasch eingespritzt wird, empfiehlt es sich, daß es in einem vorgespannten Druckbehälter angeordnet ist, der über ein oder mehrere Ventile an die Bohrungen der Kammerwand angeschlossen ist. Selbstverständlich wird unter dem Begriff Kammerwand auch die Wand einer in die Kammer eingebauten Armatur verstanden, die etwa die Sprühbohrungen und gegebenenfalls auch die Ventile trägt. Die Ventilauslösung erfolgt auch hier durch den Druck- oder Flammendetektor.

Weitere Merkmale und Vorteile des Anmeldungsgegenstandes ergeben sich aus der nachfolgenden Beschreibung zweier Ausführungsbeispiele anhand der Zeichnung; dabei zeigt
- Figur 1: eine erste Ausführungsform in der Zuleitung zu einem Filtergehäuse;
- Figur 2: eine vergrößerte Schnittdarstellung der Vorrichtung nach Figur 1;
- Figur 3: eine zweite Ausführungsform in der Zuleitung zu einem Filtergehäuse und
- Figur 4: eine vergrößerte Schnittdarstellung der Vorrichtung nach Figur 3

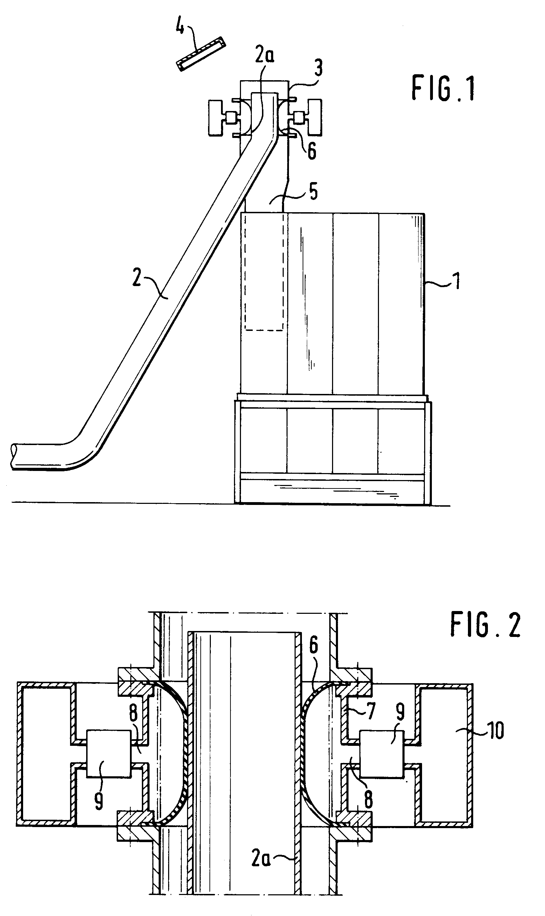

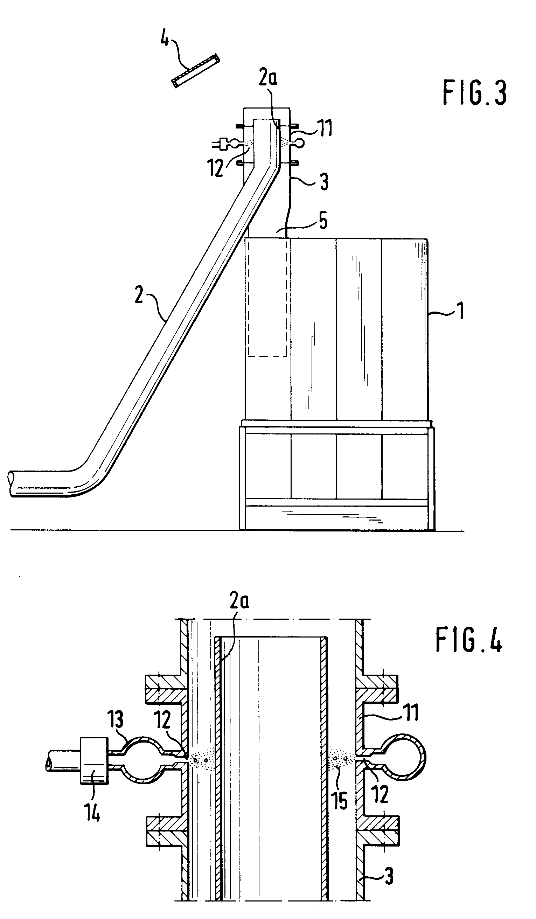

Die Figuren 1 und 3 zeigen jeweils ein Filtergehäuse 1, in dem mehrere Taschen- oder Schlauchfilter eingebaut sind, wie sie üblicherweise zur Staubabscheidung, etwa in der holzverarbeitenden Industrie eingesetzt werden. Hier muß ständig mit dem Auftreten von explosionsfähigen Brennstoff-Luft-Gemischen gerechnet werden. Die Filtergehäuse sind deshalb grundsätzlich im Freien aufgestellt und in einem gewissen Sicherheitsabstand zu den übrigen Gebäuden. Außerdem sind sie meist mit der gezeichneten Druckentlastung ausgestattet, die wie folgt aufgebaut ist.

Die ankommende Leitung 2 mündet in eine Kammer 3 und läuft mit einem vertikalen zylindrischen Teilstück 2a in der Kammer aus. Gegenüber der Austrittsöffnung des zylindrischen Abschnittes 2a ist eine Abdeckplatte 4 angeordnet. Diese Abdeckplatte ist etwa über Sollbruchstellen, über eine Klemmverbindung, durch Gewichstbelastung oder andere an sich bekannte Maßnahmen lösbar mit der Kammer 3 verbunden, so daß sie bei Überschreiten eines bestimmten Druckes in der Kammer aufgeht bzw. abgesprengt wird.

Entgegengesetzt zu dem nach oben auslaufenden Rohrabschnitt 2a geht die Kammer 3 an ihrer Unterseite in eine abgehende Leitung 5 über. Zwischen Zuleitung und Ableitung findet also eine 180^{°}-Umlenkung des Fördermediums statt.

Wesentlich ist nun, daß die Kammer 3 zylindrisch und koaxial zu dem Rohrabschnitt 2 angeordnet und mit einem Schnellverschluß ausgerüstet ist.

In den Figuren 1 und 2 ist dieser Schnellverschluß durch eine ringförmig umlaufende Membran 6 gebildet, die über ein Ventilgehäuse 7 in die Kammer 3 eingebaut ist.

Wesentlich ist außerdem, daß der zylindrische Rohrabschnitt 2a so weit nach oben verlängert und gegebenenfalls durch eine Manschette verstärkt ist, daß er als Dichtfläche gegenüber der ringförmigen Membran 6 zur Verfügung steht.

Das Ventilgehäuse 7 weist mehrere Radialbohrungen 8 auf, die jeweils über ein Ventil 9 an einen gemeinsamen Druckmittelbehälter 10 angeschlossen sind.

Wird das Ventil 9 über einen in der Zeichnung nicht dargestellten, vor der Zuleitung 2 positionierten Druck-oder Flammendetektor im Öffnungssinn ausgelöst, so entlädt sich der Druck aus der Kammer 10 über die Bohrungen 8 auf die Membran 6 und drückt diese aus der strichpunktierten Position in die vollgezeichnete Geschlossenstellung. Sie liegt dann über eine beträchtliche zylindrische Dichtfläche an dem Rohrabschnitt 2a an und sperrt damit den Übergang von der Zuleitung 2 zu der abgehenden Leitung 5.

Die über die Zuleitung 2 ankommende Explosionsfront kann sich also nur nach oben ausbreiten, eine Fortpflanzung in die abgehende Leitung 5 und die folgenden Anlageteile ist ausgeschlossen.

Die Figuren 3 und 4 zeigen die gleiche Druckentlastung mit einem anderen Verschlußorgan. Dabei ist anstelle des Ventilgehäuses 7 ein Flanschring 11 mit zahlreichen Sprühdüsen 12 in die Kammer 3 eingebaut. Die Düsen sind über den Umfang des Flanschringes 11 verteilt und auf den zentral angeordneten Leitungsabschnitt 2a gerichtet.

Wie Figur 4 zeigt, werden die Düsen 12 aus einer gemeinsamen Ringleitung 13 gespeist, die ihrerseits über ein Ventil 14 an einen nicht näher dargestellten Versorgungstank angeschlossen ist. Dieser Versorgungstank ist mit Löschmittel gefüllt und steht unter erheblichem Überdruck. Wird das Ventil 14 durch den Druck- oder Flammendetektor geöffnet, so tritt aus den Düsen 12 ein fein zerstäubter Löschmittelstrahl aus, der sich mit den Nachbarstrahlen zu einem quasi dichten Schleier 15 vereinigt.

Da die Auslösung des Ventils Sekundenbruchteile vor dem Ankommen der Explosionsfront erfolgt, ist der Zwischenraum zwischen der Kammer 3 und der Leitung 2a bereits weitgehend mit Löschmittel vernebelt und somit ebenfalls ein Schutz gegen eine Explosionsfortpflanzung gegeben.

Außerdem zeichnet sich die zuletzt beschriebene Konstruktion durch günstige Herstellungskosten und hohe Lebensdauer aus.

## Patentansprüche

1. Vorrichtung zur Explosionsdruckentlastung bei Leitungen, die von explosionsgefährlichen Stoffen durchströmt werden, wobei die vom Explosionsherd kommende Zuleitung (2) in eine Kammer (3) mündet, und dazu beabstandet, etwa in dazu entgegengesetzter Position die abgehende Leitung (5) an die Kammer (3) angeschlossen ist und die Kammer (3) außerdem zumindest eine sich unter dem Explosionsdruck zur Atmosphäre hin öffnende Schutzklappe, Abdeckplatte (4) oder dergleichen aufweist,
dadurch gekennzeichnet,
daß der zur abgehenden Leitung (5) führende Zwischenraum zwischen Kammer (3) und Zuleitung (2) zylindrisch zu dem Rohrabschnitt (2a) augeordnet und durch einen Schnellverschluß (6, 15) verschließbar ist, dessen Auslösung durch einen Vorgeschalteten Druck- oder Flammendetektor erfolgt.

2. Vorrichtung nach Anspruch 1, dadurch gekennzeichnet, daß der Schnellverschluß als etwa ringförmige, elastische Membran ausgebildet ist, die hydraulisch oder pneumatisch in die Schließstellung bringbar ist.

3. Vorrichtung nach Anspruch 2, dadurch gekennzeichnet, daß die Membran (6) an der Wand der Kammer (3) angeordnet und durch Druckbeaufschlagung nach innen an die Zuleitung (2, 2a) anpreßbar ist.

4. Vorrichtung nach Anspruch 2 oder 3, dadurch gekennzeichnet, daß die Membran (6) in der Ruhestellung bündig an die Wand der Kammer (3) anschließt.

5. Vorrichtung nach einem der Ansprüche 2 bis 4, dadurch gekennzeichnet, daß die Zuleitung (2) einen längeren zylindrischen Abschnitt (2a) koaxial und äquidistant zu der Membran (6) aufweist.

6. Vorrichtung nach einem der Ansprüche 2 bis 5, dadurch gekennzeichnet, daß die Membran (6) über ein Ventil (9) an einen vorgespannten Druckspeicher (10) angeschlossen ist.

7. Vorrichtung nach Anspruch 1, dadurch gekennzeichnet, daß der Schnellverschluß durch einen Vorhang (15) fein zerstäubten Löschmittels gebildet ist.

8. Vorrichtung nach Anspruch 7, dadurch gekennzeichnet, daß das Löschmittel über zahlreiche Bohrungen (12) in der Wand der Kammer (3) auf die Zuleitung (2, 2a) sprühbar ist.

9. Vorrichtung nach Anspruch 7 oder 8, dadurch gekennzeichnet, daß das Löschmittel in einem Druckbehälter angeordnet ist, der über ein oder mehrere Ventile (14) an die Bohrungen (12) angeschlossen ist.

10. Vorrichtung nach Anspruch 6 oder 9, dadurch gekennzeichnet, daß die Ventilauslösung im Öffnungssinn durch den Druck- oder Flammendetektor erfolgt.

## Claims

1. Apparatus for relieving explosion pressure in pipes through which potentially explosive substances flow, wherein the feed pipe (2) coming from the explosion centre leads into a chamber (3), and at a distance therefrom and in a position approximately opposite thereto, the outgoing pipe (5) is connected to the chamber (3), and the chamber (3) also has at least one protective flap, cover plate (4) or the like that opens towards the atmosphere under explosion pressure, characterised in that the intermediate space, leading to the outgoing pipe (5), between the chamber (3) and the feed pipe (2) is arranged cylindrically with respect to the pipe section (2a) and can be closed by a fast-acting closure means (6, 15) which is actuated by an upstream pressure- or flame-detector.

2. Apparatus according to claim 1, characterised in that the fast-acting closure means is in the form of an approximately annular resilient diaphragm that can be moved into the closed position hydraulically or pneumatically.

3. Apparatus according to claim 2, characterised in that the diaphragm (6) is arranged at the wall of the chamber (3) and can be pushed inwards against the feed pipe (2, 2a) by the action of pressure.

4. Apparatus according to claim 2 or claim 3, characterised in that the diaphragm (6) in its rest position adjoins the wall of the chamber (3) in such a manner that it is flush therewith.

5. Apparatus according to any one of claims 2 to 4, characterised in that the feed pipe (2) has a relatively long cylindrical section (2a) that is arranged coaxially with and equidistant from the diaphragm (6).

6. Apparatus according to any one of claims 2 to 5, characterised in that the diaphragm (6) is connected via a valve (9) to a pre-loaded pressure reservoir (10).

7. Apparatus according to claim 1, characterised in that the fast-acting closure means is formed by a curtain (15) of finely atomised extinguishing agent.

8. Apparatus according to claim 7, characterised in that the extinguishing agent can he sprayed onto the feed pipe (2, 2a) via a large number of bore-holes (12) in the wall of the chamber (3).

9. Apparatus according to claim 7 or claim 8, characterised in that the extinguishing agent is arranged in a pressure container which is connected via one or more valves (14) to the bore-holes (12).

10. Apparatus according to claim 6 or claim 9, characterised in that the valve is actuated to open by the pressure- or flame-detector.

## Revendications

1. Dispositif pour détendre la pression due à une explosion dans des conduites parcourues par des substances explosibles, le dispositif comportant une chambre (3) dans laquelle débouche une conduite d'amenée (2) venant du siège de l'explosion, et à laquelle est raccordée, à distance de la conduite d'amenée et à peu près à l'opposé de celle-ci, la conduite sortante (5), la chambre 3 possédant en outre au moins un clapet de protection, une plaque de recouvrement (4) ou un organe analogue s'ouvrant vers l'atmosphère sous la pression d'explosion, caractérisé en ce que
l'espace intermédiaire entre la chambre (3) et la conduite d'amenée (2), espace qui mène à la conduite sortante (5), est agencé sous la forme d'un cylindre par rapport au segment terminal (2a) de la conduite d'amenée et peut être obturé par une fermeture rapide (6, 15) qui est déclenchée par un détecteur de pression ou de flammes installé en amont.

2. Dispositif selon la revendication 1, caractérisé en ce que la fermeture rapide est réalisée comme une membrane élastique à peu près annulaire, qui peut être amenée hydrauliquement ou pneumatiquement à la position de fermeture.

3. Dispositif selon la revendication 2, caracterisé en ce que la membrane (6) est disposée sur la paroi de la chambre (3) et peut être pressée vers l'intérieur contre la conduite d'amenée (2, 2a) par application d'une pression.

4. Dispositif selon la revendication 2 ou 3, caractérisé en ce que la membrane (6) se raccorde à fleur à la paroi de la chambre (3) quand elle occupe sa position de repos.

5. Dispositif selon une des revendications 2 à 4, caractérisé en ce que la conduite d'amenée (2) comporte un tronçon (2a) relativement long et de forme cylindrique, qui est coaxial à la membrane (6) et espacé uniformément de celle-ci.

6. Dispositif selon une des revendications 2 à 5, caractérisé en ce que la membrane (6) est raccordée par une vanne (9) à un accumulateur de pression (10) précontraint.

7. Dispositif selon la revendication 1, caractérisé en ce que la fermeture rapide est constituée par un rideau (15) d'un produit d'extinction finement pulvérisé.

8. Dispositif selon la revendication 7, caractérisé en ce que le produit d'extinction peut être projeté sur la conduite d'amenée (2, 2a) à travers de nombreux orifices (12) formés dans la paroi de la chambre (3).

9. Dispositif selon la revendication 7 ou 8, caractérisé en ce que le produit d'extinction est contenu dans un récipient sous pression raccordé par une ou plusieurs vannes (14) aux orifices (12).

10. Dispositif selon la revendication 6 ou 9, caractérisé en ce que l'actionnement de la vanne ou des vannes dans le sens de l'ouverture s effectue par le détecteur de pression ou de flammes.
